(19) Europäisches Patentamt
European Patent Office
Office européen des brevets

(11) Numéro de publication: **0 009 480**
**B1**

(12) # FASCICULE DE BREVET EUROPEEN

(45) Date de publication du fascicule de brevet: **02.09.81**

(51) Int. Cl.³: **C 25 B 1/30**, D 21 C 9/16, C 02 F 1/72, D 06 L 3/02

(21) Numéro de dépôt: **78900292.0**

(22) Date de dépôt: **04.12.78**

(86) Numéro de dépôt international: **PCT/CH78/00044**

(87) Numéro de publication internationale: **WO 79/00347 28.06.79 Gazette 79/13**

(54) **Procédé et réacteur pour fabriquer une solution aqueuse de traitement contenant au moins des ions hydrogenoperoxydes et des ions hydroxyles selon des concentrations prédéterminées et utilisation du reacteur.**

(30) Priorité: **06.12.77 CH 14876/77**

(43) Date de publication de la demande: **16.04.80 Bulletin 80/8**

(45) Mention de la délivrance du brevet: **02.09.81 Bulletin 81/35**

(84) Etats Contractants Désignés: **CH DE FR GB SE**

(56) Documents cités:
**US - A - 3 616 442**
**US - A - 3 969 201**

(73) Titulaire: **BATTELLE MEMORIAL INSTITUTE**
**7 route de Drize**
**CH-1227 Carouge/Genève (CH)**

(72) Inventeur: **PORTA, Augusto**
**31bis av. de Miremont**
**CH-1206 Genève (CH)**
Inventeur: **FRESNEL, Jean-Marie**
**2 Hameau du Petit Champ**
**F-01630 Haut-Thoiry (FR)**
Inventeur: **KUHLHANEK, Antonin**
**47 av. du Lignon**
**CH-1219 Le Lignon (CH)**

(74) Mandataire: **Dousse, Blasco et al,**
**7, route de Drize**
**CH-1227 Carouge/Genève (CH)**

**EP 0 009 480 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Procédé et réacteur pour fabriquer une solution aqueuse de traitement contenant au moins des ions hydrogenoperoxydes et des ions hydroxyles selon des concentrations prédéterminées et utilisation du réacteur

## Domaine Technique

La présente invention a pour objet un procédé ainsi qu'un réacteur, pour fabriquer une solution aqueuse de traitement contenant au moins des ions hydrogenoperoxydes et des ions hydroxyles selon des concentrations prédéterminées.

## Technique antérieure

Parmi les agents de blanchiment connus, le peroxyde d'hydrogène (ou eau oxygénée) tend à l'heure actuelle à être de plus en plus utilisé, notamment pour le blanchiment de matériaux tels que les textiles ou la pâte à papier. Le peroxyde d'hydrogène présente en effet sur les autres agents de blanchiment, surtout le chlore et ses composés, l'avantage primordial grâce à la douceur de son action, d'attaquer de façon beaucoup moindre les fibres du matériau à traiter, tout en exerçant une action plus durable et en laissant un meilleur fini.

Le peroxyde d'hydrogène est généralement utilisé dans le blanchiment sous la forme d'une solution alcaline stabilisée faiblement concentrée en peroxyde. L'action du peroxyde d'hydrogène dans le blanchiment consiste essentiellement à détruire ou à décolorer par oxydation, ou encore à solubiliser les colorants naturels. On admet généralement, bien que le mécanisme de ces réactions soit encore peu étudié, que c'est l'ion hydrogenoperoxyde $HOO^-$ qui est responsable du blanchiment.

Les solutions de blanchiment actuelles à base de peroxyde d'hydrogène présentent cependant l'inconvénient majeur par rapport aux autres solutions classiques de blanchiment (notamment celles à base d'hypochlorites) d'être relativement coûteuses, de sorte que la généralisation de leur emploi reste fortement tributaire de considérations économiques, notamment lorsqu'il s'agit de traiter d'importantes quantités de matériaux à faible valeur finale tels que la pâte à papier. Les solutions de blanchiment actuelles sont en effet presque exclusivement préparées par de simples opérations de dissolution et de dilution, à partir des constituants chimiques disponibles sur le marché. Or, le peroxyde d'hydrogène disponible sur le marché constitue un produit particulièrement coûteux, étant donné qu'il n'est fabriqué que dans un nombre restreint de grandes unités industrielles, et qu'il doit par conséquent être fortement concentré aux fins de stockage et de transport avant de pouvoir être distribué.

On ressent donc à l'heure actuelle le besoin de remplacer ces procédés de préparation à partir des constituants fortement concentrés du commerce par des procédés de fabrication "in situ" permettant de produire directement des solutions diluées de peroxyde d'hydrogène, afin de réduire le coût du blanchiment. Aucune solution satisfaisante ne semble cependant avoir encore vu le jour jusqu'à présent.

Le peroxyde d'hydrogène tend par ailleurs à l'heure actuelle à être également utilisé, outre blanchiment, dans un nombre croissant d'autres traitements, notamment dans le domaine de la dépollution. Cependant, les solutions de traitement utilisées à cet effet sont également presque exclusivement préparées à partir des constituants fortement concentrés du commerce, de sorte qu'elles présentent toujours les mêmes inconvénients que précédemment.

On a par allieurs proposé depuis longtemps de fabriquer du peroxyde d'hydrogène par voie électrolytique, par réduction de l'oxygene sur une cathode en milieu alcalin (voir US—A 3,969,201 et 3,616,442) Cependant, les methodes proposées jusqu'à présent conduisent à la production de peroxyde d'hydrogène en concentration relativement élevée et à un pH élevé, de sorte que les produits obtenus avec ces méthodes sont trop concentrés pour pouvoir être utilisés directement comme solutions de traitement telles que désirées dans la présente invention.

## Exposé de l'invention

La présente invention a précisément pour but de pallier les inconvénients susmentionnés, en proposant un procédé de fabrication électrolytique permettant de produire "in situ" des solutions diluées de peroxyde d'hydrogène, directement utilisables comme solutions de traitement pour des applications variées.

A cet effet, la présente invention a pour objet un procédé pour fabriquer une solution aqueuse de traitement contenant au moins des ions hydrogenoperoxydes et des ions hydroxyles selon des concentrations prédéterminées, lesdites concentrations prédéterminées étant susceptibles de varier à l'intérieur d'une gamme de concentrations telle que ladite solution de traitement présente respectivement une concentration en eau oxygénée totale restant comprise entre 0,1 et 10 grammes/litres de solution et un pH restant inférieur à 14. Dans ce procede, on

utilise au moins une cellule électrolytique comprenant une cathode poreuse en contact avec un catholyte et une anode, en contact avec un anolyte;

amèner ce catholyte proximité de ladite cathode poreuse, celui-ci étant une solution aqueuse alcaline dont le pH initial est choisi inférieur à celui désiré pour la solution de traitement à fabriquer; on

fait circuler, simultanément, au contact de ladite cathode poreuse un gaz sous pression contenant de l'oxygène et ledit catholyte de façon à provoquer, sous l'effet du passage du courant électrique dans ladite cellule, la formation d'ions hydrogenoperoxydes et d'ions

hydroxyles par électroréduction de l'oxygène à ladite cathode. Ce procédé se distingue de l'art antérieur par le fait qu'on effectue ladite circulation au contact de ladite cathode poreuse de manière et jusqu'à ce que chaque portion dudit catholyte atteigne une concentration en ions hydrogenoperoxydes de 0,1 à 10 g/l, le pH restant inférieur à 14, et qu'on évacuer alors vers l'extérieur le catholyte ayant atteint lesdites concentrations, ce catholyte constituant alors ladite solution de traitement.

La présente invention a également pour objet un réacteur électrochimique pour la mise en oeuvre d'un tel procédé.

Ainsi, on voit que l'une des caractéristiques essentielles du procédé qui vient d'être défini consiste à mettre à profit le principe connu de production de peroxyde d'hydrogène par réduction d'oxygène sur une cathode pour fabriquer directement une solution aqueuse de traitement à faible concentration en ions hydrogenoperoxydes et en ions hydroxyles (au lieu d'utiliser ce principe pour fabriquer des produits à forte concentration en peroxyde d'hydrogène comme dans l'état de la technique connu). La production directe par voie électrolytique d'une telle solution de traitement à faible concentration est essentiellement rendue possible grâce à l'emploi judicieux comme catholyte d'une solution alcaline initiale faiblement concentrée (concentration initiale du catholyte choisie inférieure à la concentration désirée en ions hydroxyles pour la solution de traitement), ainsi que grâce au choix correct des conditions dans lesquelles se déroule l'électrolyse, la mise en oeuvre de cette électrolyse entraînant une concentration progressive du catholyte en ions hydrogenoperoxydes et en ions hydroxyles, lequel est évacué vers l'extérieur lorsqu'il atteint les concentrations désirées pour la solution de traitement.

De manière avantageuse, les paramètres régissant le procédé selon l'invention (concentration initiale de la solution alcaline, quantité d'électricité passant dans le réacteur, dimensionnement du réacteur, etc. ...) seront ajustés de façon que la solution évacuée du réacteur électrochimique présente respectivement une concentration en eau oxygénée totale (c'est-à-dire ions hydrogenoperoxydes $HO_2^-$ + eau oxygénée $H_2O_2$) comprise entre 0,1 et 10 grammes/litres de solution et un pH inférieur à 14 (les gammes de pH et de concentration en eau oxygénée sus-énoncées correspondant sensiblement à celles que l'on rencontre dans les solutions de traitement conventionnelles obtenues par les procédés classiques de dilution). La solution alcaline introduite initialement dans le réacteur électrochimique sera en particulier choisie de façon que son pH initial soit compris entre 7 et 12. Comme alcali constitutif de cette solution initiale, on pourra a priori envisager d'utiliser tous les alcalis connus, tels que la soude, la potasse, etc.... Cependant, on utilisera plus spécialement de la soude, compte tenu de son coût peu élevé.

Cette fabrication directe d'une solution de traitement par voie électrolytique peut être effectuée selon deux méthodes différentes, l'une discontinue et l'autre continue. La méthode continue consiste à travailler avec des volumes de catholyte choisis en fonction des performances de la cathode de façon telle qu'ils puissent être amenés aux concentrations voulues en un seul passage sur la cathode, cette méthode permettant ainsi d'obtenir, par apport continu de solution initiale sur la cathode, une production continue de solution de traitement. Une telle méthode est plus particulièrement adaptée à la production en continu de petites quantités de solution de traitement.

La méthode discontinue consiste, quant à elle, à travailler avec des volumes de catholyte notablement supérieurs à ceux que les performances de la cathode permettraient de traiter en un seul passage, et à recycler ces volumes jusqu'à ce qu'ils atteignent les concentrations désirées. Une telle méthode est plus particulièrement adaptée à la production en discontinu de grandes quantités de solution de traitement.

On peut par ailleurs envisager d'incorporer un certain nombre d'additifs aux solutions initiales destinées à être transformées par électrolyse en solutions de blanchiment, notamment des tampons de silicate (en fonction de la concentration en ions hydroxyles) destinés à maintenir le pH de la solution dans une gamme de valeurs optimale, fixée de préférence entre 10, 5 et 11 en début de réaction de blanchiment.

La solution de traitement obtenue par le procédé selon l'invention peut notamment être utilisée comme solution de blanchiment, en vue d'effectuer le blanchiment de matériaux tels que des textiles, de la pulpe, de la pâte à papier (pâtes cellulosiques ou pâtes à haut rendement), du carton (blanchiment en surface), de l'amidon, du son, etc.... Le blanchiment de ces matériaux peut être effectué, soit directement par un procédé de contact ou d'imprégnation dans le cas où la solution de blanchiment est obtenue par une méthode continue, soit indirectement par des systèmes classiques tels que tours à blanchiment (batch ou semi-batch) dans le cas où la solution de blanchiment est obtenue par une méthode discontinue.

En ce qui concerne plus spécialement le blanchiment de la pâte à papier, on sait par ailleurs que les constituants de la solution de blanchiment doivent obéir à des conditions de concentration bien précises pour donner lieu à de bonnes performances de blanchiment. Ces conditions de concentration sont généralement exprimées par les spécialistes des techniques papetières en poids de constituants purs à incorporer dans une pâte sèche, et elles doivent ensuite être recalculées (afin d'exprimer la quantité de constituant par unité de volume de solution de blanchiment) de façon à tenir compte aussi bien de la consistance initiale de

la pâte à blanchir que de la densité finale de la pâte obtenue après incorporation de la solution de blanchiment. On sait en effet que la pâte à blanchir n'est en règle générale jamais sèche, et qu'elle possède une consistance initiale plus ou moins grande en fonction des traitements préalables appliqués à la pâte, cette consistance initiale étant généralement comprise entre 20 et 88% (la consistance désignant la proportion de matière fibreuse dans la pâte humidifiée). On sait également qu'une pâte de consistance déterminée doit encore généralement être diluée lors de l'opération de blanchiment pour des raisons de commodité de traitement, cette dilution étant précisément assurée par l'incorporation de la solution de blanchiment, la densité finale de la pâte obtenue après cette incorporation devant généralement être comprise entre 5 et 18%.

Ainsi, dans le cas d'une solution de blanchiment où l'alcali est constitué par de la soude, il est généralement admis que les constituants de la solution doivent obéir aux conditions suivantes (ramenées à la pâte sèche) pour donner lieu à un blanchiment correct: présence d'eau oxygénée dans la proportion de 1 à 2 grammes pour 100 grammes de pâte sèche et présence de soude dans la proportion de 0,5 à 2,5 grammes pour 100 grammes de pâte sèche. Les conditions sus-énoncées exigent, pour que l'on puisse opérer le blanchiment de la pâte à papier dans tous les cas susceptibles d'être rencontrés dans la pratique (à savoir blanchiment d'une pâte dont la consistance initiale avant blanchiment peut varier de 20 à 88% et dont la densité finale après incorporation de la solution de blanchiment doit se trouver comprise entre 5 et 18%), que l'on soit en mesure de fabriquer une solution de blanchiment dont les concentrations en eau oxygénée et en soude puissent varier, respectivement, entre 0,4 et 9 grammes par litres de solution de blanchiment pour l'eau oxygénée et entre 0,2 et 11 grammes par litres de solution de blanchiment pour la soude, les proportions respectives en eau oxygénée et en soude dans la solution devant par ailleurs être telles que le rapport en poids de l'eau oxygénée par rapport à la soude reste compris entre 0,4 et 4 (ainsi qu'on peut le montrer par des calculs relativement simples). Le procédé selon l'invention permet précisément d'obtenir toute solution de blanchiment située à l'intérieur de ces gammes de concentrations, en contrôlant de manière appropriée la concentration initiale de la solution de soude utilisée comme catholyte ainsi que la quantité d'électricité délivrée au réacteur électrochimique.

La solution de traitement obtenue par le procédé selon l'invention peut également, outre le blanchiment, être utilisée pour tout autre traitement dans lequel sont susceptibles d'être mises à profit différentes propriétés du peroxyde d'hydrogène, telles que son effet oxydo-réducteur (réactions chimiques susceptibles d'entraîner la destruction de mauvaises odeurs ou la destruction d'excès d'oxydants forts tels que le chlore), sont effet batéricide, ou son action comme source d'oxygène dissous. La solution de traitement selon l'invention peut ainsi, à titre d'exemple, être utilisée pour effectuer des traitements tels que: traitement des eaux de piscine, traitement des effluents domestiques, traitement des eaux de pisaculture, apport d'oxygène sous forme dissoute dans des milieux vivants demandeurs d'oxygène, etc. . . .

Brève description des dessins

Le dessin annexé illustre, schématiquement et à titre d'exemple, deux formes d'exécution ainsi que des variantes de réacteurs électrochimiques pour la mise en oeuvre du procédé de fabrication de solution de traitement selon l'invention.

La figure 1 est une vue en coupe schématique illustrant une première forme d'exécution.

La figure 2 est une vue en coupe schématique illustrant une seconde forme d'exécution.

La figure 3 est une vue en coupe schématique, illustrant une variante de la figure 2.

La figure 4 est une vue en coupe schématique, illustrant une première application du réacteur de la figure 2.

La figure 5 est une vue en coupe schématique, illustrant une seconde application du réacteur de la figure 2.

La figure 6 est une vue en coupe schématique, illustrant une troisième application du réacteur de la figure 2.

Meilleures manières de réaliser l'invention

La première forme d'exécution représentée à la figure 1 est relative à un réacteur électrochimique du type à "cellule fermée", destiné à permettre la fabrication de la solution de traitement de l'invention selon une méthode discontinue. Le réacteur représenté sur cette figure 1 comprend une cellule élémentaire unique 1 constituée par un carter sensiblement horizontal 2 fait en un matériau électriquement isolant. Ce carter 2 est divisé par un diaphragme plan 3 disposé horizontalement en deux compartiments superposés 4 et 5, respectivement, un compartiment cathodique inférieur 4 et un compartiment anodique supérieur 5. Le compartiment cathodique 4 est lui-même divisé par une cathode poreuse plane 6 disposée horizontalement en deux chambres superposées 7 et 8, respectivement, une chambre supérieure 7 et une chambre inférieure 8. La chambre supérieure 7 est destinée à contenir le catholyte, et elle est respectivement munie à ses extrémités opposées d'un orifice d'entrée 7a et d'un orifice de sortie 7b pour le catholyte. La chambre inférieure 8 est destinée à assurer l'alimentation en air sous surpression (de l'ordre de 0,1 à 1 bar) de la cathode poreuse 6, par

l'intermédiaire d'un orifice d'entrée 8a raccordé àune source d'air sous pression (non représentée), l'excédent d'air sous pression étant susceptible de s'échapper par des soupapes de sécurité 8b. L'électrode poreuse 6 (électrode à diffusion gazeuse) est de manière avantageuse faite en un matériau conducteur hydrophobe capable d'arrêter l'eau tout en laissant passer l'air. Cette cathode poreuse 6 peut ainsi, à titre d'exemple, être constituée par un feutre de carbone imprégné d'une suspension de téflon (par la firme Du Pont de Nemours), ou par des blocs poreux de carbone vitreux à porosité ouverte, l'épaisseur de cette cathode étant par ailleurs avantageusement comprise entre 5 et 10 mm.

Le compartiment anodique 5 est, quant à lui, destiné à contenir l'anolyte, et il est respectivement équipé d'une anode 9 (ou contre-électrode) disposée contre sa paroi supérieure et de deux orifices d'entrée 5a et sortie 5b pour l'anolyte, situés à ses extrémités opposées. L'anode 9 est de manière avantageuse faite en un matériau conducteur chimiquement et électrochimiquement inerte vis-à-vis de l'anolyte. Cette anode 9 peut ainsi, à titre d'exemple, être constituée par un matériau tel que du titane platiné, du graphite, de l'acier inox convenablement choisi, ou tout autre matériau désigné habituellement sous le vocable "dimensionally stable anode". Le diaphragme plan 3 qui sépare l'anolyte du catholyte est enfin constitué de manière avantageuse par une membrane échangeuse de cations, ou par un diaphragme micro-poreux semi-perméable.

Dans le réacteur de la figure 1, les orifices de sortie 7b et d'entrée 7a de la chambre 7 sont en outre reliés entre eux par des moyens de recyclage du catholyte, formés d'un conduit 10 et d'un organe de pompage 11. De manière analogue les orifices de sortie 5b et d'entrée 5a du compartiment anodique 5 sont reliés entre eux par des moyens de recyclage de l'anolyte formés d'un conduit 12 et d'un organe de pompage 13. Le réacteur comprend encore un premier conduit d'admission 14 branché par l'intermédiaire d'une vanne 15 sur une portion de conduit 12 voisine de l'orifice d'entrée 5a du compartiment anodique 5; un second conduit d'admission 16 branché par l'intermédiaire d'une vanne 17 sur une portion du conduit 10 voisine de l'orifice d'entrée 7a de la chambre 7; et un conduit d'évacuation 18 branché par l'intermédiaire d'une vanne 19 sur le conduit 10, en aval de l'organe de pompage 11.

Le premier conduit d'admission 14 est destiné à permettre l'introduction dans le compartiment anodique 5 d'une solution initiale de soude présentant une concentration initiale en soude supérieure à celle que l'on désire obtenir pour la solution de traitement, cette solution initiale étant destinée à constituer l'anolyte du réacteur. Le second conduit d'admission 16 est quant à lui destiné à permettre l'introduction dans la chambre 7 d'une solution initiale de soude présentant une concentration initiale inférieure à celle que l'on désire obtenir pour la solution de traitement, cette solution étant destinée à constituer le catholyte du réacteur. Le conduit d'évacuation 18 est enfin destiné à permettre le prélèvement vers l'extérieur du catholyte, après que ce dernier ait subi un certain nombre de recyclages l'ayant amené aux concentrations désirées, le catholyte ainsi extrait constituant la solution de traitement.

Enfin, la cathode poreuse 6 et l'anode 9 du réacteur sont destinées à être respectivement reliées aux pôles négatif et positif d'une source de tension continue 20.

Le réacteur électrochimique qui vient d'être décrit fonctionne de la manière suivante: le choix des concentrations en eau oxygénée et en soude de la solution de traitement que l'on désire fabriquer ayant été défini en fonction de l'application envisagée (par exemple en vue d'effectuer le blanchiment sous une densité finale déterminée d'une pâte à papier de consistance initiale donnée), on ouvre les vannes d'admission 15 et 17 et on introduit par les conduits d'admission respectifs 14 et 16, respectivement, dans le compartiment anodique 5, une solution de soude ayant une concentration initiale supérieure à celle de la solution de traitement à fabriquer, et dans la chambre 7 équipée de la cathode 6, une solution de soude ayant une concentration initiale inférieure à celle de la solution de traitement à fabriquer (les quantités de solution introduites étant fonction des volumes respectifs des chambres 5 et 7). Les vannes d'admission 15 et 17 été refermées, on met ensuite le réacteur électrochimique sous tension et on met en marche les moyens d'alimentation en air de la cathode 6, ainsi que les moyens de recyclage du catholyte et de l'anolyte. Les réactions se déroulant aux électrodes sont alors, respectivement,

à l'anode:

$$2\ OH^- \rightarrow \tfrac{1}{2}O_2 + H_2O + 2\ e^-$$

et à la cathode:

$$O_2 + H_2O + 2\ e^- \rightarrow HO_2^- + OH^-$$

On voit ainsi que le passage du catholyte à travers la chambre 7 a pour effet de provoquer, par réduction de l'oxygène à la cathode, la formation d'ions hydrogenoperoxydes $HO_2^-$ et d'ions hydroxyles $OH^-$, le recyclage permanent du catholyte entraînent par ailleurs une concentration progressive de ce catholyte en ions hydrogenoperoxydes et en ions hydroxyles. On voit de même que le passage de l'anolyte à travers le compartiment anodique 5 entraîne une réduction progressive de la concentration en soude de cet anolyte. Le recyclage du catholyte et de l'anolyte est poursuivi jusqu'à ce que les concentrations du catholyte en ions

hydrogenoperoxydes et en ions hydroxyles atteignent les valeurs désirées. Ces valeurs étant atteintes, on arrête alors l'électrolyse et on évacue le catholyte vers l'extérieur par l'intermédiaire du conduit d'évacuation 18, le catholyte ainsi évacué constituant la solution de traitement désirée, laquelle peut alors être utilisée pour toute application appropriée. L'anolyte dont la concentration en soude s'est fortement réduite est également évacué du réacteur, cet anolyte évacué étant par ailleurs susceptible d'être récupéré en vue de servir de catholyte pour la fabrication d'une nouvelle fournée de solution de traitement (transfert schématisé au dessin par la ligne en pointillés 21).

Dans la forme d'exécution qui vient d'être décrite, la position strictement horizontale du réacteur n'est pas obligatoire. On peut même envisager, de manière particulièrement avantageuse, de disposer ce réacteur selon une position légèrement inclinée (de l'ordre de 10°), de façon à empêcher l'accumulation dans le compartiment anodique de l'oxygène se formant à l'anode, et de favoriser ainsi son évacuation à l'extérieur.

Dans le processus électrochimique décrit jusqu'à présent, on a indiqué que c'était la solution cathodique chargée en eau oxygénée qui constituait le produit utile directement utilisable comme solution de traitement pour des applications variées, la solution anodique appauvrie en soude ne constituant en fait qu'un sous-produit ne présentant que peu d'intérêt (mis à part la possibilité de récupération susmentionnée). Il est cependant possible d'envisager une valorisation de ce sous-produit que constitue la solution anodique, en apportant au processus électrochimique précédemment décrit des modifications minimes permettant de produire une solution anodique contenant de l'hypochlorite. Pour ce faire, il convient simplement d'introduire dans le compartiment anodique 5 une solution aqueuse initiale contenant à la fois de la soude en plus grande concentration (environ 10 g/l) ainsi que du chlorure de sodium (environ également 10 g/l) L'introduction dans le compartiment anodique de cette solution initiale contenant du chlorure de sodium rend par ailleurs possible l'introduction dans le compartiment cathodique d'une solution initiale contenant également du chlorure de sodium, ceci pour améliorer la conductivité des solutions et diminuer la chute ohmique à travers le séparateur échangeur cationique (ce chlorure de sodium ne participant pas à la réaction cathodique mais servant seulement de sel support).

La présence du chlorure de sodium en solution dans le compartiment anodique a pour but d'entraîner la formation de chlore gazeux au contact de l'anode, selon la réaction:

$$2\ Cl^- \rightarrow Cl_2 + 2\ e^-$$

le chlore gazeux ainsi formé réagissant avec la soude pour donner de l'hypochlorite, selon la réaction:

$$Cl_2 + 2\ NaOH \rightarrow NaOCl + NaCl + H_2O$$

Le recyclage permanent de l'anolyte entraîne donc (ainsi qu'on peut le constater en examinant l'ensemble des réactions se déroulant dans le compartiment anodique), une concentration progressive de cet anolyte en hypochlorite, ainsi qu'une réduction progressive de sa concentration en soude.

La solution anodique obtenue en fin de recyclage, chargée en hypochlorite, peut alors être utilisée en combinaison avec la solution cathodique chargée en eau oxygénée, en vue d'opérer le traitement de tout matériau approprié. De manière avantageuse, on effectuera un tel traitement en amenant d'abord la solution anodique chargée en hypochlorite puis la solution cathodique chargée en eau oxygénée au contact du matériau à traiter. L'utilisation combinée d'hypochlorite et d'eau oxygénée présente l'avantage majeur d'entraîner la formation d'oxygène "singlet", lequel s'avère être un excellent agent oxydant.

Dans la forme d'exécution du type à "cellule fermée" décrite jusqu'à présent, on peut par ailleurs envisager de supprimer les moyens de recyclage du catholyte et de l'anolyte, et de remplacer la cellule unique 1 du réacteur par une pluralité de cellules montées en série à la suite les unes des autres, de façon à obtenir la concentration désirée en un seul passage à travers les différentes cellules, cette variante s'apparentant alors à une méthode de production continue.

La seconde forme d'exécution représentée à la figure 2 est relative à un réacteur électrochimique du type à "cellule ouverte", destiné à permettre la fabrication de la solution de traitement de l'invention selon une méthode continue. Le réacteur électrochimique représenté sur cette figure 2 comprend une cellule élémentaire unique 31 de forme tubulaire. Cette cellule 31 se compose de deux enveloppes tubulaires poreuses concentriques 32 et 33 au fond arrondi, à savoir, une enveloppe extérieure 32 faite en un matériau poreux électriquement isolant tel que de la céramique poreuse ou du polypropylène poreux, et une enveloppe intérieure 33 faite en un matériau isolant microporeux hydrophile tel que toile ou feutre (par exemple en nylon, fibre de verre ou polyethylène). L'extrémité ouverte de ces enveloppes 32 et 33 est fermée par un couvercle plan 34 fait en un matériau isolant. L'enveloppe intérieure 33 est appelée à jouer le rôle d'un diaphragme microporeux divisant la cellule 31 en deux compartiments coaxiaux 35 et 36, respectivement, un compartiment anodique central 35 de forme cylindrique, et un compartiment cathodique périphérique 36 de forme annulaire. Le compartiment anodique central 35 est équipé d'une anode tubulaire

poreuse 37 disposée contre la paroi interne du diaphragme microporeux 33, cette anode poreuse 37 étant faite en un matériau tel que du graphite poreux ou du carbone vitreux poreux. Ce compartiment anodique 35 est destiné à contenir l'anolyte, et il est muni à sa partie supérieure d'un orifice d'entrée 38 traversant le couvercle 34. Le compartiment cathodique périphérique 36 est quant à lui rempli par un lit tassé de particules électriquement conductrices 39 (telles que des granules de graphite et de charbon actif ou des fibres de carbone), destinées à servir de cathode tridimensionnelle. Ce lit est rendu partiellement hydrophobe par un traitement avec une suspension de téflon. Ce lit de particules 39 est traversé sur toute sa longueur par un conduit 40 percé d'une multiplicité d'ouvertures, dont les extrémités sont respectivement raccordées à un orifice d'entrée 40a et un orifice de sortie 40b ménagés en deux endroits diamétralement opposés dans le couvercle 34. Autour de ce conduit 40 se trouve enroulé un collecteur de courant filiforme 41 (par exemple en or), destiné à être raccordé au pôle négatif d'une source de tension continue 42 dont l'autre pôle positif est raccordé à l'anode 37.

Le conduit percé 40 est destiné à être raccordé par l'intermédiaire de l'orifice d'entrée 40a à une source d'air sous pression 43 capable de délivrer de l'air froid sous une surpression de l'ordre de 0,02 à 0,05 bar 2, le conduit 40 étant ainsi chargé d'assurer l'alimentation en air sous pression de la cathode dispersée 39 (l'air froid ayant pour but de maintenir l'intérieur de la cellule 1 à une température de l'ordre de 15 à 20°C, de façon à optimaliser le rendement de l'électrolyse). L'orifice d'entrée 38 du compartiment anodique 35 est enfin destiné à être raccordé, par l'intermédiaire d'un organe de pompage 44, à un réservoir (non représenté) contenant une solution de soude dont la concentration est sensiblement identique (ou légèrement supérieure) à la concentration en soude de la solution de traitement que l'on désire fabriquer. Cet organe de pompage 44 est chargé d'alimenter de façon continue le compartiment anodique 35 en solution de soude sous pression, la pression sous laquelle cette solution de soude est introduite étant choisie de façon que le compartiment anodique 35 soit en surpression permanente par rapport au compartiment cathodique 36.

Le réacteur électrochimique qui vient d'être décrit fonctionne de la manière suivante: le choix des concentrations en eau oxygénée et en soude de la solution de traitement qu'on désire fabriquer ayant été fixé, on met sous tension la cellule 31 et on met en marche les moyens d'alimentation en solution de soude du compartiment anodique 35 ainsi que les moyens d'alimentation en air de la cathode dispersée 39, tout en maintenant le compartiment anodique 35 en surpression constante par rapport au compartiment cathodique 36. La solution de soude qui s'écoule dans le compartiment anodique 35 (constituant ainsi l'anolyte) subit au contact de l'anode 37 la réaction anodique (réaction identique à celle énoncée précédemment), de sorte qu'elle se charge en oxygène tout en perdant une partie de sa concentration en soude, cette solution appauvrie en soude traversant ensuite le diaphragme microporeux 33 sous l'effet de la surpression. Arrivée dans le compartiment cathodique 36, cette solution appauvrie en soude (qui constitue ainsi le catholyte) subit alors la réaction cathodique (réaction également identique à celle énoncée précédemment), de sorte qu'elle se charge en ions hydrogenoperoxydes et en ions hydroxyles avant de s'écouler à l'extérieur sous formes de gouttelettes 45 sur les parois extérieures de la céramique poreuse 32. Les paramètres régissant le fonctionnement de la cellule 31 (tension et densité de courant appliqués à la cellule, pressions appliquées dans les compartiments cathodique et anodique, etc....) sont choisis de façon que l'enrichissement en ions hydrogenoperoxydes et en ions hydroxyles du catholyte puisse atteindre les valeurs de concentration fixées pour la solution de traitement au moment où ce catholyte est évacué à l'extérieur sous la forme de gouttelettes 45, de sorte que l'ensemble de ces gouttelettes 45 constitue la solution de traitement, laquelle peut alors être utilisée pour l'application désirée.

Le réacteur 51 représenté à la figure 3 constitue une variante du réacteur 31 de la figure 2, suivant laquelle la position respective des compartiments cathodique et anodique se trouve inversée par rapport à celle de la figure 2, les autres éléments du réacteur restant par ailleurs sensiblement identiques. Ce réacteur 51 comprend essentiellement deux compartiments annulaires coaxiaux 55 et 56 séparés l'un de l'autre par un diaphragme cylindrique microporeux 53, à savoir respectivement, un compartiment anodique extérieur 55 muni d'une anode 57 et d'une orifice d'entrée 58 pour la solution de soude, et un compartiment cathodique intérieur 56 muni d'une cathode 59 et d'un orifice d'entrée 60 pour l'alimentation en oxygène. La paroi cylindrique intérieure 52 de ce compartiment cathodique 56 est constitué par une céramique poreuse destinée à laisser passer le catholyte qui s'est concentré en ions hydrogenoperoxydes et en ions hydroxyles, le catholyte ainsi concentré s'écoulant alors vers l'extérieur sous forme de gouttelettes 45.

La solution de traitement ainsi produite en continu sous forme de gouttelettes par les réacteurs à "cellule ouverte" des figures 2 et 3 peut, de manière particulièrement avantageuse être ensuite utilisée directement pour effectuer les traitements désirés, par des méthodes de contact ou d'imprégnation.

La figure 3 illustre ainsi également à titre d'exemple une application possible pour le réacteur 51 représenté sur cette figure, consistant à effectuer directement par contact le blanchiment de matériaux se présentant sous la forme de pulpe ou de fibres (tels que la pâte à papier). En vue de cette application, le réacteur 51 est équipé d'une vis d'Archimède 61 montée rotativement à l'intérieur du canal tubulaire 62 délimité par la paroi cylindrique intérieure 52: le matériau à blanchir est introduit de manière continue à l'une des extrémités du canal 62 (introduction schématisée par la flèche 63 au dessin), et il se trouve ainsi soumis à un blanchiment progressif au contact des gouttellettes 45, au fur et à mesure de sa progression (assurée par la vis 61) le long du canal 62 (sortie du matériau schématisée au dessin par la flèche 64).

La figure 4 illustre une première application possible du réacteur représenté à la figure 2, consistant à effectuer le blanchiment de matériaux se présentant sous la forme d'une bande continue 65 (telle que nappe fibreuse, feuille ...), à l'aide d'une pluralité de paires de réacteurs 31 montés rotativement à la façon de rouleaux, entre lesquels défile la bande continue 65.

La figure 5 illustre une seconde application possible du réacteur de la figure 2, consistant à effectuer le traitement du substances liquides (par exemple régénération d'eau de piscine), à l'aide d'un réacteur 31 monté à l'intérieur d'un conduit tubulaire 66 dans lequel circule la substance liquide à traiter (on pourrait en variante envisager de monter une vis d'Archimède annulaire entre le réacteur 31 et le conduit 66, en vue d'effectuer un traitement analogue à celui de la figure 3).

La figure 6 illustre une troisième application possible, consistant à effectuer la régénération d'un milieu liquide, au moyen d'un réacteur 31 inséré au sein d'un filtre biologique en sable 67 disposé sur le fond d'un récipient 68 contenant le milieu liquide 69 à régénérer.

## Exemple 1

On utilise une cellule de production de solution de traitement analogue à celle de la figure 1, qui présente les caractéristiques suivantes:

—cathode en feutre de graphite rendue hydrophobe en profondeur par un traitement approprié;

—anode en titane platiné;

—séparateur du type membrane échangeuse cationique vendue dans le commerce sous le nom de NAFION 425 (par la firme Du Pont de Nemours). La surface du séparateur est de 2,85 $dm^2$.

Dans cette cellule, on introduit respectivement dans le compartiment cathodique, une solution aqueuse de soude présentant une concentration initiale en soude égale à 0,04 g/l, et dans le compartiment anodique, une solution aqueuse de soude présentant une concentration initiale en soude égale à 1,1 g/l, les volumes de solution respectifs introduits dans chacun des compartiments étant de 560 $cm^3$ (la température de ces solutions étant par ailleurs maintenue á 22°C).

On met la cellule sous tension en la reliant aux bornes d'une source d'alimentation potentiostatique, et on met en marche les moyens d'alimentation en air de la cathode ainsi que les moyens de recyclage du catholyte et de l'anolyte. La cellule est alors réglée pour délivrer une solution finale de traitement (catholyte en fin de recyclage) contenant 1,8 g/l d'eau oxygénée et 2,88 g/l de soude: pour ce faire, on règle la tension de la cathode de façon qu'elle soit égale à — 950 mV par rapport à une électrode de référence Hg, HgO (ce qui correspond à une différence de potentiel aux bornes de la cellule égale à 3,5 Volts et à une densité de courant moyenne de 1 $A/dm^2$), et on procède au recyclage de catholyte et de l'anolyte pendant 50 min temps au bout duquel le catholyte atteint les concentrations désirées (susmentionnées) en eau oxygénée et en soude. Le catholyte est alors évacué vers l'extérieur (on en recueille 555,5 $cm^3$) pour être utilisé comme solution de traitement.

Le rendement faradique final en eau oxygénée est de 66,4% et la consommation énergétique correspond à 8,3 kwh par kilo d'eau oxygénée à 100%

La solution de traitement ainsi obtenue est à titre d'exemple utilisée pour opérer le blanchiment de la pâte de bois mécanique. Cette solution de traitement (555,5 $cm^3$) est alors immédiatement chauffée à 70°C, puis mélangée intimement à 444,5 g d'une pâte de bois mécanique présentant une densité initiale de 22,5% (soit 100 g de pâte sèche) et un degré de blanc initial de 55. La densité finale de la pâte obtenue après ce mélange intime estde 10% (les quantités d'eau oxygénée et de soude par rapport à la pâte sèche étant alors respectivement de 1% et de 1,6%).

Le mélange effectué, on laisse ensuite l'ensemble au repos durant 2 heures tout en maintenant la température de la pâte à 70°C. Le pH de la pâte qui était initialement de 11,4 tombe alors à 8,15 à la fin de cette periode de 2 heures) et le degré de blanc passe de 55 à 63.

A titre comparatif, on réalise une opération de blanchiment analogue par voie purement chimique, en utilisant une solution de traitement de synthèse fabriquée à partir d'eau oxygénée et de soude du commerce (le traitement restant par ailleurs identique en ce qui concerne le lot de pâte utilisé, les conditions de densité de pâte, de concentration de réactif, de température et de temps). On obtient un degré de blanc de 62,8.

## Exemple 2

On utilise une cellule de production de solution de traitement pratiquement identique à celle de l'exemple 1, mis à part le fait que dans le compartiment anodique se trouve toutefois rajouté un lit de granules de charbon actif

(interposé entre la paroi du compartiment et le collecteur de courant constitué par une grille de titane platiné).

Dans cette cellule, on introduit respectivement, dans le compartiment cathodique, une solution aqueuse de soude et de chlorure de sodium comprenant initialement 0,04 g/l de soude et 10 g/l de chlorure de sodium, et dans le compartiment anodique, une solution aqueuse de soude et de chlorure de sodium comprenant initialement 10 g/l de soude et 10 g/l de chlorure de sodium (les volumes de solution introduits dans chacun des compartiments étant de 650 $cm^3$, et ces solutions étant maintenues à 15°C).

La cellule étant mise en marche, on règle alors la tension de la cathode de façon qu'elle soit égale à — 965 mV par rapport à l'électrode de référence Hg, HgO (la différence de potentiel aux bornes de la cellule étant alors de 2,2 V et la densité de courant moyenne de 3,5 $A/dm^2$), et on procède au recyclage du catholyte et de l'anolyte durant 20 minutes. A la fin de ce recyclage, on obtient respectivement dans le compartiment cathodique, une solution qui contient 2,2 g/l d'eau oxygénée et 2,9 g/l de soude, et dans le compartiment anodique, une solution qui contient 1,6 g/l d'hypochlorite. Le rendement faradique final en ce qui concerne la production d'eau oxygénée est de 67% et la consommation énergétique correspond à 5,11 kwh/kg d'eau oxygénée à 100%.

Les solutions ainsi obtenues sont utilisées pour opérer le blanchiment de la pâte de bois mécanique. Pour effectuer ce blanchiment, on peut ainsi procéder de la manière suivante: on prélève 100 $cm^3$ de la solution anodique contenant l'hypochlorite, qu'on verse dans 444,5 g d'une pâte ayant une densité initiale de 22,5% (100 g de pâte sèche) et un degré de blanc initial de 55. On porte ce mélange pâte-solution à 70°C en 15 minutes, tout en mixant bien ce mélange. On prélève ensuite 455,5 $cm^3$ de la solution cathodique contenant l'eau oxygénée, qu'on ajoute à ce mélange. On brasse intimement le tout, et on laisse reposer l'ensemble durant 2 heures à 70°C. Le mélange final ainsi obtenu est constitué par une pâte à densité 10% (contenant au départ 1% d'eau oxygénée par rapport à la pâte sèche).

Le degré de blanc mesuré après rinçage de la pâte est égal à 71 (degré blanc initial égal à 55).

## Revendications

1. Procédé pour fabriquer une solution aqueuse de traitement contenant des ions hydrogénoperoxyde et hydroxyle en concentrations prédéterminées au moyen d'une cellule électrolytique comprenant une anode en contact avec un anolyte et une cathode poreuse en contact avec un catholyte constitué par une solution aqueuse alcaline dont le pH initial est inférieur à celui, désiré, pour la solution de traitement à fabriquer, suivant lequel, pendant l'électrolyse, on fait circuler, simultanément, au contact de ladite cathode poreuse le catholyte et un gaz sous pression contenant de l'oxygène de façon à provoquer, par réduction cathodique de celui-ci, la formation dans ledit catholyte d'ions hydrogénoperoxyde et hydroxyle, caractérisé par le fait que cette circulation du catholyte dans le compartiment cathodique est effectuée de manière que chaque partie du liquide en mouvement se charge progressivement en ions hydroxyle et hydroperoxyde jusqu'à ce que la concentration de ceux-ci atteigne 0,1 à 10 g/l, le pH étant inférieur à 14, et qu'on évacue le liquide ainsi obtenu, celui-ci constituant alors ladite solution de traitement.

2. Procédé selon la revendication 1, caractérisé par le fait que le pH de ladite solution initiale destinée à constituer le catholyte est compris entre 7 et 12.

3. Procédé selon la revendication 1, caractérisé par le fait que l'alcali constitutif de ladite solution initiale destinée à constituer le catholyte est de la soude caustique.

4. Procédé selon la revendication 1, caractérisé par le fait qu'on utilise une cathode poreuse se présentant sous la forme d'une plaque rigide faite en un matériau poreux électriquement conducteur, qu'on amène ledit gaz sous pression contenant de l'oxygène au contact de l'une des faces de ladite plaque en injectant ledit gaz par l'autre face de cette plaque, qu'on fait simultanément circuler ledit catholyte le long de ladite face par où émerge ledit gaz, de façon à provoquer la formation d'ions hydrogenoperoxydes et d'ions hydroxyles le long de cette face, qu'on évacue ensuite temporairement ledit catholyte vers l'extérieur et qu'on le fait recirculer le long de la même face de ladite plaque poreuse, de façon à entraîner la concentration progressive dudit catholyte en ions hydrogenoperoxydes et en ions hydroxyles, lesdites évacuation temporaire et recirculation étant répétées jusqu'à ce que ledit catholyte atteigne lesdites concentrations prédéterminées, ledit catholyte ayant atteint lesdites concentrations prédéterminées étant alors définitivement évacué vers l'extérieur.

5. Procédé selon la revendication 4, caractérisé par le fait qu'on fait en outre circuler l'anolyte au contact de ladite anode celui-ci etant une solution aqueuse alcaline dont le pH initial est choisi au moins égal à celui désiré pour la solution de traitement à fabriquer.

6. Procédé selon la revendication 5, caractérisé par le fait que l'alcali constitutif de ladite solution initiale destinée à servir d'anolyte est de la soude caustique.

7. Procédé selon la revendication 6, caractérisé par le fait que ladite solution aqueuse de soude caustique contient, en outre, du chlorure de sodium, de façon à permettre la fabrication d'hypochlorite.

8. Procédé selon la revendication 1 caractérisé par le fait qu'on utilise une cathode

poreuse se présentant sous la forme d'un lit tassé de particules électriquement conductrices, et qu'on fait circuler simultanément ledit gaz sous pression contenant de l'oxygène et ledit catholyte au travers dudit lit tassé de particules, le volume dudit catholyte en circulation étant choisi relativement à la surface totale de contact dudit lit tassé de façon que ledit catholyte atteigne lesdites concentrations prédéterminées en un seul passage au travers dudit lit, le catholyte ayant atteint lesdites concentrations prédéterminées étant alors définitivement évacué vers l'extérieur.

9. Procédé selon la revendication 8, caractérisé par le fait qu'on fait en outre circuler au contact de ladite anode une solution aqueuse alcaline dont le pH initial est choisi au moins égal à celui désiré pour la solution de traitement à fabriquer, l'anolyte ainsi constitué par cette solution initiale subissant une réduction de son alcalinité à son contact avec ladite anode, et qu'on transfère ensuite ledit anolyte ayant ainsi subi ladite réduction d'alcalinité à proximité immédiate dudit lit tassé de particules, ledit anolyte ainsi transféré étant alors destiné à constituer ladite solution initiale faiblement alcaline servant de catholyte.

10. Procédé selon la revendication 9, caractérisé par le fait que ledit transfert d'électrolyte de ladite anode audit lit tassé de particules est effectué au moyen d'une pression hydrostatique.

11. Réacteur électrochimique pour la mise en oeuvre du procédé selon la revendication 4, caractérisé par le fait qu'il inclut au moins une cellule électrolytique comprenant:

—un compartiment anodique équipé d'une anode électrochimiquement inerte vis-à-vis du milieu, destiné à contenir l'anolyte, ledit compartiment anodique étant pourvu d'une entrée et d'une sortie pour l'anolyte,
—un compartiment cathodique équipé d'une cathode se présentant sous la forme d'une plaque rigide faite en un matériau poreux électriquement conducteur, ladite plaque étant disposée de façon à subdiviser ledit compartiment cathodique en une première chambre destinée à contenir le catholyte et en une seconde chambre destinée à être alimentée en un gaz sous pression contenant de l'oxygène, ladite première chambre étant par ailleurs pourvue d'une entrée et d'une sortie pour le catholyte,
—un diaphragme isolant semi-perméable interposé entre ledit compartiment cathodique et ledit compartiment anodique,
—des premiers moyens pour faire recirculer ledit anolyte au travers dudit compartiment anodique,
—et des seconds moyens pour faire recirculer ledit catholyte au travers de ladite première chambre dudit compartiment cathodique.

12. Réacteur électrochimique selon la revendication 11, caractérisé par le fait que le matériau microporeux constitutif de ladite cathode en forme de plaque rigide est hydrophobe.

13. Réacteur selon la revendication 12, caractérisé par le fait que ledit matériau microporeux hydrophobe est constitué par un feutre de carbone imprégné d'une suspension de téflon.

14. Réacteur selon la revendication 12, caractérisé par le fait que ledit matériau microporeux hydrophobe est constitué par des blocs poreux de carbone vitreux à porosité ouverte.

15. Réacteur selon la revendication 11, caractérisé par le fait que l'épaisseur de ladite cathode en forme de plaque rigide est avantageusement comprise entre 5 et 10 mm.

16. Réacteur selon la revendication 11, caractérisé par le fait que ledit diaphragme isolant est constitué par une membrane échangeuse de cations.

17. Réacteur selon la revendication 11, caractérisé par le fait que ledit diaphragme isolant est un diaphragme microporeux semiperméable.

18. Réacteur selon la revendication 11, caractérisé par le fait qu'il comprend une pluralité de cellules montées en série à la suite les unes des autres.

19. Réacteur électrochimique pour la mise en oeuvre du procédé selon la revendication 9, caractérisé par le fait qu'il inclut au moins une cellule électrolytique comprenant:

—un compartiment anodique équipé d'une anode électrochimiquement inerte vis-à-vis du milieu, destiné à contenir l'anolyte, ledit compartiment anodique étant pourvu d'une entrée pour l'anolyte,
—un compartiment cathodique équipé d'une cathode se présentant sous la forme d'un lit tassé de particules électriquement conductrices,
—un diaphragme interposé entre lesdits compartiments anodique et cathodique, fait en un matériau poreux électriquement isolant, la paroi dudit compartiment cathodique opposée audit diaphragme étant également faite en un matériau poreux électriquement isolant,
—des premiers moyens pour introduire au sein dudit lit tassé de particules dudit compartiment cathodique ledit gaz sous pression contenant de l'oxygène,
—et des seconds moyens pour introduire dans ledit compartiment anodique ladite solution initiale fortement alcaline destinée à servir d'anolyte, lesdits second moyens étant par ailleurs agencés de façon à maintenir dans ledit compartiment anodique une pression constamment supérieure à celle régnant dans ledit compartiment cathodique, de façon à permettre d'une part, le transfert de l'anolyte appauvri en alcali dudit compartiment anodique audit compartiment cathodique au travers dudit diaphragme poreux, et d'autre part, l'évacuation vers l'extérieur, au travers de la paroi poreuse dudit compartiment

cathodique du catholyte ayant atteint lesdites concentrations prédéterminées en ions hydrogenoperoxydes et en ions hydroxyles.

20 Réacteur selon la revendication 19, caractérisé par le fait que ledit matériau poreux isolant constitutif dudit diaphragme est hydrophile.

21. Réacteur selon la revendication 20, caractérisé par le fait que ledit matériau poreux hydrophile est constitué par une toile ou un feutre.

22. Réacteur selon la revendication 19, caractérisé par le fait que le matériau constitutif de la paroi dudit compartiment cathodique opposée audit diaphragme est de la céramique poreuse.

23. Réacteur selon la revendication 19, caractérisé par le fait que le matériau constitutif de la paroi dudit compartiment cathodique opposée audit diaphragme est du polypropylène poreux.

24. Réacteur selon la revendication 19, caractérisé par le fait que lesdits compartiments anodique et cathodique revêtent une forme tubulaire, et qu'ils sont agencés concentriquement l'un à l'autre.

25. Réacteur selon la revendication 24, caractérisé par le fait que ledit compartiment anodique revêt une forme cylindrique, ledit compartiment cathodique étant disposé annulairement autour dudit compartiment anodique cylindrique.

26. Réacteur selon la revendication 24, caractérisé par le fait que lesdits compartiment anodique et cathodique revêtent tous deux une forme annulaire, ledit compartiment anodique entourant ledit compartiment cathodique.

27. Utilisation du réacteur selon la revendication 25, pour effectuer une imprégnation directe par contact de matériaux se présentant sous la forme de bande.

28. Utilisation du réacteur selon la revendication 26, pour effectuer une imprégnation directe par contact de matériaux se présentant sous la forme de pulpe ou de fibres, les matériaux à traiter étant avancés au moyen d'une vis d'Archimède au travers de l'espace cylindrique central dudit réacteur.

**Patentansprüche**

1. Verfahren zur Herstellung einer wässrigen Behandlungslösung, die Wasserstoffsuperoxid-Ionen und Hydroxyl-Ionen in vorherbestimmten Konzentrationen enthält, mittels einer elektrolytischen Zelle, die eine Anode in Kontakt mit einem Anolyten und eine poröse Kathode in Kontakt mit einem Katholyten, bestehend aus einer wässrigen alkalischen Lösung, deren ursprünglicher pH-Wert unter dem für die herzustellende Behandlungslösung gewünschten leigt, umfaßt, nach welchem man während der Elektrolyse gleichzeitig den Katholyten und ein unter Druck stehendes, Sauerstoff enthaltendes Gas in Kontakt mit der porösen Kathode zirkulieren läßt, so daß durch kathodische Reduktion desselben die Bildung von Wasserstoffsuperoxid und Hydroxyl-Ionen in dem Katholyten hervorgerufen wird, dadurch gekennzeichnet, daß diese Zirkulation des Katholyten in dem kathodischen Abteil so durchgeführt wird, daß jeder Teil der in Bewegung befindlichen Flüssigkeit sich fortschreitend mit Hydroxyl- und Wasserstoffsuperoxid-Ionen auflädt, bis die Konzentration dieser 0,1 bis 10 g/l erreicht, wobei der pH-Wert unter 14 liegt, und daß man die derart erhaltene Flüssigkeit entfernt, wobei diese dann die Behandlungslösung darstellt.

2. Verfahren nach Anspruch 1, dadurch gekennzeichnet, daß der pH-Wert der ursprünglichen Lösung, die den Katholyten bilden soll, zwischen 7 und 12 liegt.

3. Verfahren nach Anspruch 1, dadurch gekennzeichnet, daß das gebundene Alkali der ursprünglichen Lösung, die den Katholyten bilden soll, Ätznatron ist.

4. Verfahren nach Anspruch 1, dadurch gekennzeichnet, daß man eine poröse Kathode verwendet, die die Form einer starren Platte hat, welche aus einem porösen elektrisch leitenden Material besteht, daß man das unter Druck stehende, Sauerstoff enthaltende Gas in Kontakt mit einer der Seiten der Platte bringt, indem man das Gas durch die andere Seite dieser Platte injiziert, daß man gleichzeitig den Katholyten entlang der Seite zirkulieren läßt, aus der Gas austritt, so daß die Bildung von Wasserstoffsuperoxid-Ionen und von Hydroxyl-Ionen entlang dieser Seite hervorgerufen wird, daß man dann zeitweise den Katholyten nach aussen hin entfernt und daß man ihn entlang der gleichen Seite der porösen Platte erneut zirkulieren läßt, so daß die progressive Konzentration des Katholyten mit Wasserstoffsuperoxid-Ionen und mit Hydroxyl-Ionen stattfindet, wobei die zeitweise Entfernung und erneute Zirkulation wiederholt werden, bis der Katholyt die vorherbestimmten Konzentration erreicht, und wobei der Katholyt, wenn er die vorherbestimmten Konzentrationen erreicht hat, dann endgültig nach außen hin entfernt wird.

5. Verfahren nach Anspruch 4, dadurch gekennzeichnet, daß man außerdem den Anolyten in Kontakt mit der Anode zirkulieren läßt, wobei diese eine wässrige alkalische Lösung ist, deren ursprünglicher pH-Wert mindestens gleich demjenigen ausgewählt wird, der für die herzustellende Behandlungslösung gewünscht wird.

6. Verfahren nach Anspruch 5, dadurch gekennzeichnet, daß das gebundene Alkali der ursprünglichen Lösung, die als Anolyt dienen soll, Ätznatron ist.

7. Verfahren nach Anspruch 6, dadurch gekennzeichnet, daß die wässrige Ätznatron-Lösung außerdem Natriumchlorid enthält, so daß die Herstellung von Hypochlorit ermöglicht wird.

8. Verfahren nach Anspruch 1, dadurch gekennzeichnet, daß man ein poröse Kathode verwendet, die die Form einer zusammengepreßten Schicht aus elektrisch leitenden Teilchen hat, und daß man gleichzeitig das unter Druck stehende, Sauerstoff enthaltende Gas und den Katholyten durch die aus Teilchen zusammengepreßte Schicht zirkulieren läßt, wobei das Volumen des in Zirkulation befindlichen Katholyten relativ zur Gesamtkontaktfläche der zusammengepreßten Schicht ausgewählt wird, so daß der Katholyt die vorherbestimmten Konzentrationen bei einem einzigen Durchlauf durch das Bett erreicht und der Katholyt, wenn er die vorherbestimmten Konzentrationen erreicht hat, dann endgültig nach außen entfernt wird.

9. Verfahren nach Anspruch 8, dadurch gekennzeichnet, daß man außerdem in Kontakt mit der Anode eine wässrige alkalische Lösung zirkulieren läßt, deren ursprünglicher pH-Wert zumindest gleich dem für die herzustellende Behandlungslösung gewünschten ist, so daß der so aus dieser ursprünglichen Lösung bestehende Anolyt bei seinem Kontakt mit der Anode eine Reduktion seiner Alkalinität erfährt, und daß man dann den Anolyten, der so diese Reduktion der Alkalinität erfahren hat, ganz nahe an die aus Teilchen zusammengepreßte Schicht bringt, wobei dann der so übertragene Anolyt die ursprüngliche, nur schwach alkalische Lösung bilden soll, die als Katholyt dient.

10. Verfahren nach Anspruch 9, dadurch gekennzeichnet, daß die Übertragung des Elektrolyten der Anode zu der aus Teilchen zusammengepreßten Schicht mittels eines hydrostatischen Druckes stattfindet.

11. Elektrochemischer Reaktor zur Durchführung des Verfahrens nach Anspruch 4, dadurch gekennzeichnet, daß er mindestens eine elektrolytische Zelle aufweist mit

—einem anodischen Abteil, das mit einer gegenüber dem Milieu elektrochemisch inerten Anode versehen ist und den Anolyten enthalten soll, wobei das anodische Abteil mit einem Eingang und einem Ausgang für den Anolyten versehen ist,

—einem kathodischen Abteil, das mit einer Kathode versehen ist, die die Form einer starren, aus einem porösen elektrisch leitenden Material bestehenden Platte aufweist, die so beschaffen ist, daß sie das kathodische Abteil in eine erste Kammer, die den Katholyten enthalten soll, und in eine zweite Kammer, die mit einem unter Druck stehenden, Sauerstoff enthaltenden Gas gespeist werden soll, unterteilt, wobei die erste Kammer im übrigen mit einem Eingang und einem Ausgang für den Katholyten versehen ist,

—einer isolierenden, halb-durchlässigen Scheidewand, die zwischen dem kathodischen Abteil und dem anodischen Abteil eingesetzt ist,

—ersten Mitteln, um den Anolyten durch das anodische Abteil zirkulieren zu lassen,

—und zweiten Mitteln, um den Katholyten erneut durch die erste Kammer des kathodischen Abteils zirkulieren zu lassen.

12. Elektrochemischer Reaktor nach Anspruch 11, dadurch gekennzeichnet, daß das mikroporöse, gebundene Material der Kathode in Form einer starren Platte hydrophobisch ist.

13. Reaktor nach Anspruch 12, dadurch gekennzeichnet, daß das mikroporöse, hydrophobe Material aus einem mit einer Teflonlösung imprägnierten Kohlenstoffilz besteht.

14. Reaktor nach Anspruch 12, dadurch gekennzeichnet, daß das mikroporöse, hydrophobe Material aus porösen, glasigen Kohlenstoffblocks mit offener Porosität besteht.

15. Reaktor nach Anspruch 11, dadurch gekennzeichnet, daß die Dicke der Kathode in Form einer starren Platte vorteilhaft zwischen 5 und 10 mm liegt.

16. Reaktor nach Anspruch 11, dadurch gekennzeichnet, daß die Scheidewand aus einer austauschbaren Kation-Membran besteht.

17. Reaktor nach Anspruch 11, dadurch gekennzeichnet, daß die isolierende Scheidewand eine mikroporöse, halb-durchlässige Scheidewand ist.

18. Reaktor nach Anspruch 11, dadurch gekennzeichnet, daß er eine Vielzahl von Zellen aufweist, die in Serie eine auf die andere folgend angeordnet sind.

19. Elektrochemischer Reaktor zur Durchführung des Verfahrens nach Anspruch 9, dadurch gekennzeichnet, daß er mindestens eine elektrolytische Zelle aufweist mit

—einem anodischen Abteil, das mit einer gegenüber dem Milieu elektrochemisch inerten Anode versehen ist, die den Anolyten enthalten soll, wobei das anodische Abteil mit einem Eingang für den Anolyten versehen ist,

—einem kathodischen Abteil, das mit einer Kathode in Form einer zusammengepreßten Schicht aus elektrisch leitenden Teilchen versehen ist,

—einer Scheidewand, die zwischen dem anodischen und dem kathodischen Abteil eingesetzt ist und aus einem porösen, elektrisch isolierenden Material besteht, wobei die Wand des kathodischen Abteil gegenüber der Scheidewand ebenfalls aus einem porösen, elektrisch isolierenden Material besteht,

—ersten Mitteln zum Einleiten des unter Druck stehenden, Sauerstoff enthaltenden Gases in das Innerste der aus Teilchen zusammengepreßten Schicht des kathodischen Abteils,

—und zweiten Mitteln zum Einleiten der ursprünglichen, stark alkalischen Lösung, die als Anode dienen soll, in das anodische Abteil, wobei die zweiten Mittel im übrigen so betrieben werden, daß sie in dem anodischen

Abschnitt einen Druck aufrechterhalten, der ständig über dem in dem kathodischen Abteil herrschenden liegt, dergestalt, daß einerseits die Übertragung des von Alkali ausgelaugten Anolyten des anodischen Abteils in das kathodische Abteil durch die poröse Scheidewand hindurch ermöglicht wird, und andererseits die Entfernung des Katholyten nach außen durch die poröse Wand des kathodischen Abteils, wenn er die vorherbestimmten Konzentrationen an Wasserstoffsuperoxid-lonen und Hydroxyl-lonen erreicht hat.

20. Reaktor nach Anspruch 19, dadurch gekennzeichnet, daß das poröse, isolierende, gebundene Material der Scheidewand hydrophil ist.

21. Reaktor nach Anspruch 20, dadurch gekennzeichnet, daß das poröse, hydrophile Material aus einem Gewebe oder einem Filz besteht.

22. Reaktor nach Anspruch 19, dadurch gekennzeichnet, daß das gebundene Material der Wand des kathodischen Abteils gegenüber der Scheidewand aus poröser Keramik besteht.

23. Reaktor nach Anspruch 19, dadurch gekennzeichnet, daß das gebundene Material der Wand des kathodischen Abteils gegenüber der Scheidewand aus porösen Polypropylen besteht.

24. Reaktor nach Anspruch 19, dadurch gekennzeichnet, daß die anodischen und kathodischen Abteile eine röhrenförmige Form umhüllen, und daß sie konzentrisch zueinander angeordnet sind.

25. Reaktor nach Anspruch 24, dadurch gekennzeichnet, daß das anodische Abteil eine zylindrische Form umhüllt, wobei das kathodische Abteil ringförmig um das zylindrische anodische Abteil angeordnet ist.

26. Reaktor nach Anspruch 24, dadurch gekennzeichnet, daß das anodische und das kathodische Abteil, beide eine ringförmige Form umhüllen, wobei das anodische Abteil das kathodische Abteil umgibt.

27. Verwendung des Reaktors nach Anspruch 25 zur Durchführung einer unmittelbaren Imprägnierung durch Kontakt von Materialien, die sich in Form eines Bandes darbieten.

28. Verwendung des Reaktors nach Anspruch 26, zur Durchführung einer unmittelbaren Imprägnierung durch Kontakt von Materialien, die sich in Form von Pulpe oder Fasern darbieten, wobei die zu behandelnden Materialien mittels einer Archimedischen Schraube durch den zylindrischen Mittelraum des Reaktors vorgeschoben werden.

**Claims**

1. A process for fabricating an aqueous treatment solution containing hydrogen peroxide ions and hydroxyl ions in predetermined concentrations by means of an electrolytic cell comprising an anode in contact with an anolyte and a cathode in contact with a catholyte constituted from an aqueous alkaline solution the initial pH of which is below that pH desired for the treatment solution to be fabricated, according to which, in the course of the electrolysis one simultaneously circulates in contact with said porous cathode the catholyte and an oxygen containing pressurized gas so as to cause, by the cathodic reduction of the latter, the formation in said catholyte of hydrogenoperoxide and hydroxide ions, characterized by the fact that this circulation of the catholyte in the cathodic compartment is carried out in such a manner that each fraction of the liquid being displaced loads itself progressively with hydroxide and hydroperoxide until the concentration thereof reaches 0.1 to 10 g/l, the pH staying below 14, and one removes the liquid thus obtained, this liquid constituting then said treatment solution.

2. A process according to claim 1, characterized in that the pH of said initial solution forming the catholyte lies between 7 and 12.

3. A process according to claim 1, characterized in that the constituent alkali of said initial solution constituting the catholyte is sodium hydroxide.

4. A process according to claim 1, characterized in that a porous cathode is used in the form of a rigid plate made of an electrically conducting porous material, said oxygen-containing compressed gas is brought into contact with one of the faces of said plate by injecting said gas by way of the other face of said plate, said catholyte is simultaneously circulated along said face where said gas emerges so as to cause formation of hydrogen peroxide ions and hydroxyl ions along said face, said catholyte is temporarily discharged to the outside and then recirculated along the same face of said porous plate so as to cause the concentration of hydrogen peroxide ions and hydroxyl ions to increase progressively in said catholyte, said temporary discharge and recirculation being repeated until said catholyte attains said predetermined concentration, said catholyte having attained said predetermined concentration then being finally discharged to the outside.

5. A process according to claim 4, characterised in that the anolyte is circulated in contact with said anode said anolyte consisting of an aqueous alkaline solution having an initial pH at least equal to the desired pH of the treatment solution to be fabricated.

6. A process according to claim 5, characterised in that the constituent alkali of said initial solution constituting the anolyte is sodium hydroxide.

7. A process according to claim 6, characterized in that said aqueous sodium hydroxide solution also contains sodium chloride, to enable hypochlorite to be produced.

8. A process according to claim 1, characterised by using a porous cathode in the form of a packed bed of electrically conducting particles, and simultaneously circulating said oxygen-containing compressed gas and said catholyte through said packed bed of particles, the volume of said catholyte in circulation being chosen relative to the total area of contact of said packed bed so that said catholyte attains said predetermined concentration in a single passage through said bed, the catholyte having attained said predetermined concentration then being finally discharged to the outside.

9. A process according to claim 8, characterised in that an aqueous alkaline solution having an initial pH chosen at least equal to the required pH for the treatment solution to be prepared is also circulated in contact with said anode, the anolyte thus constituted by said initial solution undergoing a decrease of its alkalinity in contact with said anode, said anolyte having thus undergone said decrease in alkalinity then being transferred into the immediate proximity of said packed bed of particles, said transferred anolyte then constituting said initial weakly alkaline solution which serves as the catholyte.

10. A process according to claim 9, characterised in that said transfer of electrolyte from said anode to said packed bed of particles is carried out by hydrostatic pressure.

11. An electrochemical reactor for effecting the process according to claim 4, characterised by including at least one electrolytic cell comprising:

—an anode compartment fitted with an anode which is electrochemically inert towards the medium, said anode compartment being designed to contain the anolyte and provided with an inlet and outlet for the anolyte,
—a cathode compartment fitted with a cathode in the form of a rigid plate made of an electrically conducting porous material, said plate being disposed in a manner such as to divide said cathode compartment into a first chamber designed to contain the catholyte and a second chamber designed to be fed with an oxygen-containing compressed gas, said first chamber being provided with an inlet and outlet for the catholyte,
—a semi-permeable insulating diaphragm disposed between said cathode compartment and said anode compartment,
—first means for recirculating said anolyte through said anode compartment,
—and second means for recirculating said catholyte through said first chamber of said cathode compartment.

12. An electrochemical reactor as claimed in claim 11, characterised in that the micro-porous material constituting said cathode in the form of a rigid plate is hydrophobic.

13. A reactor as claimed in claim 12, characterised in that said hydrophobic microporous material is constituted by a carbon felt impregnated with a teflon suspension.

14. A reactor as claimed in claim 12, characterised in that said hydrophobic microporous material is constituted by porous blocks of vitreous carbon of open porosity.

15. A reactor as claimed in claim 11, characterised in that the thickness of said cathode of rigid plate form advantageously lies between 5 and 10 mm.

16. A reactor as claimed in claim 11, characterised in that said insulating diaphragm is constituted by a cation exchange membrane.

17. A reactor as claimed in claim 11, characterised in that said insulating diaphragm is a semi-permeable micro-porous diaphragm.

18. A reactor as claimed in claim 11, characterised by comprising a plurality of cells disposed in series one after the other.

19. An electrochemical reactor for effecting the process as claimed in claim 9, characterised by including at least one electrolytic cell comprising:

—an anode compartment fitted with an anode which is electrochemically inert towards the medium, said anode compartment being designed to contain the anolyte and provided with an inlet for the anolyte,
—a cathode compartment fitted with a cathode in the form of a packed bed of electrically conducting particles,
—a diaphragm disposed between said anode and cathode compartments and constructed of an electrically insulating porous material, that wall of said cathode compartment opposite the diaphragm being also made of an electrically insulating porous material,
—first means for feeding said oxygen-containing compressed gas into the body of said packed bed of particles in said cathode compartment,
—and second means for feeding said initial strongly alkaline solution constituting the anolyte into said anode compartment, said second means being arranged to maintain in said anode compartment a pressure which is always greater than the pressure in said cathode compartment, so as to enable the alkali-depleted anolyte of said anode compartment to be transferred to said cathode compartment through said porous diaphragm, and also to enable the catholyte which has attained said predetermined hydrogen peroxide ion and hydroxyl ion concentration to be discharged to the outside through the porous wall of said cathode compartment.

20. A reactor as claimed in claim 19, characterised in that said insulating porous material constituting said diaphragm is hydrophilic.

21. A reactor as claimed in claim 20, characterised in that said hydrophilic porous material is constituted by a cloth or felt.

22. A reactor as claimed in claim 19, characterised in that the constituent material of the wall of said cathode compartment opposite said diaphragm is of porous ceramic.

23. A reactor as claimed in claim 19, characterised in that the constituent material of the wall of said cathode compartment opposite said diaphragm is of porous polypropylene.

24. A reactor as claimed in claim 19, characterised in that said anode and cathode compartments have a tubular shape, and are disposed concentrically to each other.

25. A reactor as claimed in claim 24, characterised in that said anode compartment has a cylindrical shape, said cathode compartment being disposed annularly about said cylindrical anode compartment.

26. A reactor as claimed in claim 24, characterised in that said anode and cathode compartments both have an annular shape, said anode compartment surrounding said cathode compartment.

27. Use of the reactor as claimed in claim 25 for directly impregnating, by contact, material in the form of a band.

28. Use of the reactor as claimed in claim 26, for directly impregnating, by contact, material in the form of pulp or fibres, said material to be treated being fed by an Archimedes screw through the central cylindrical space in said reactor.

FIG. 1

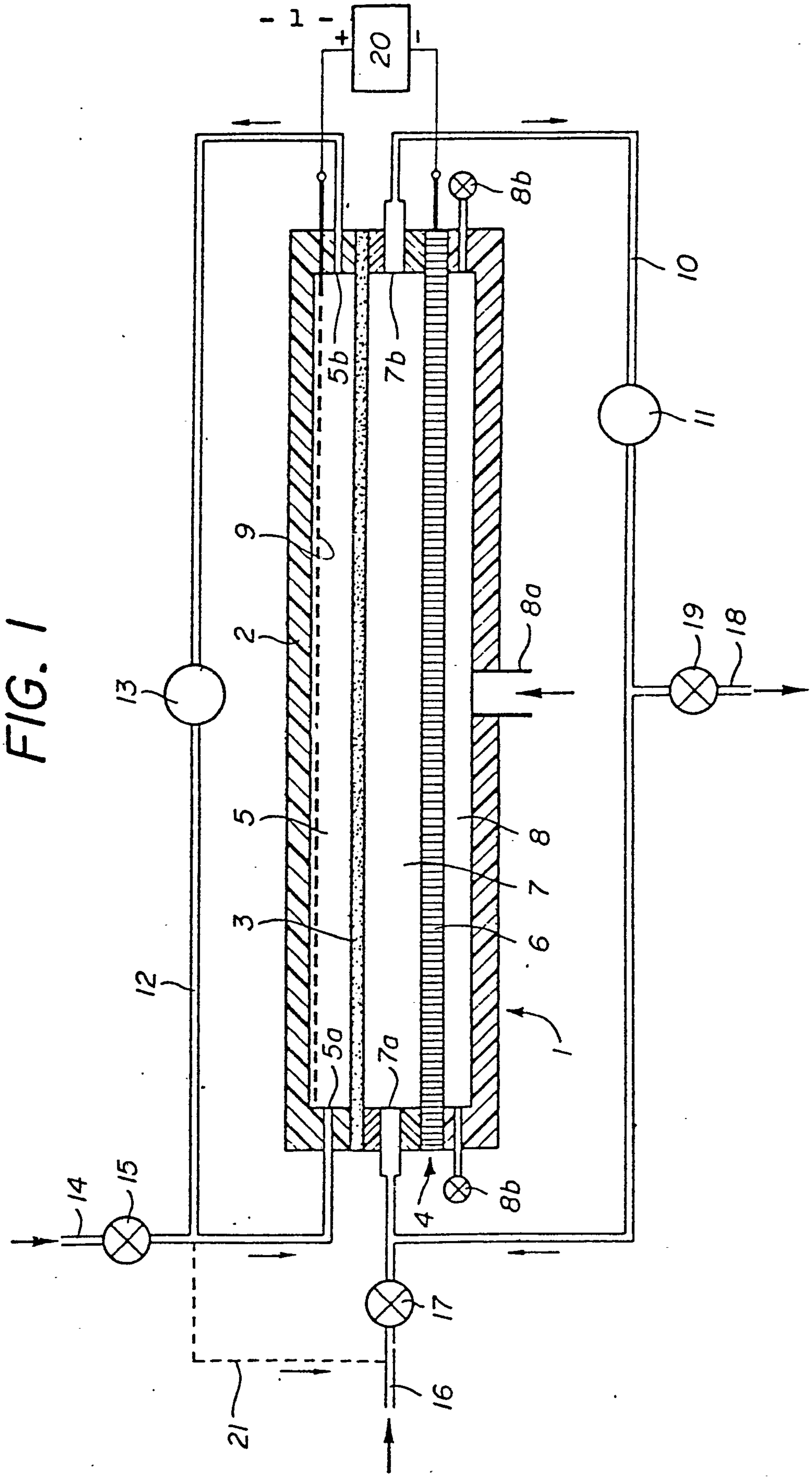

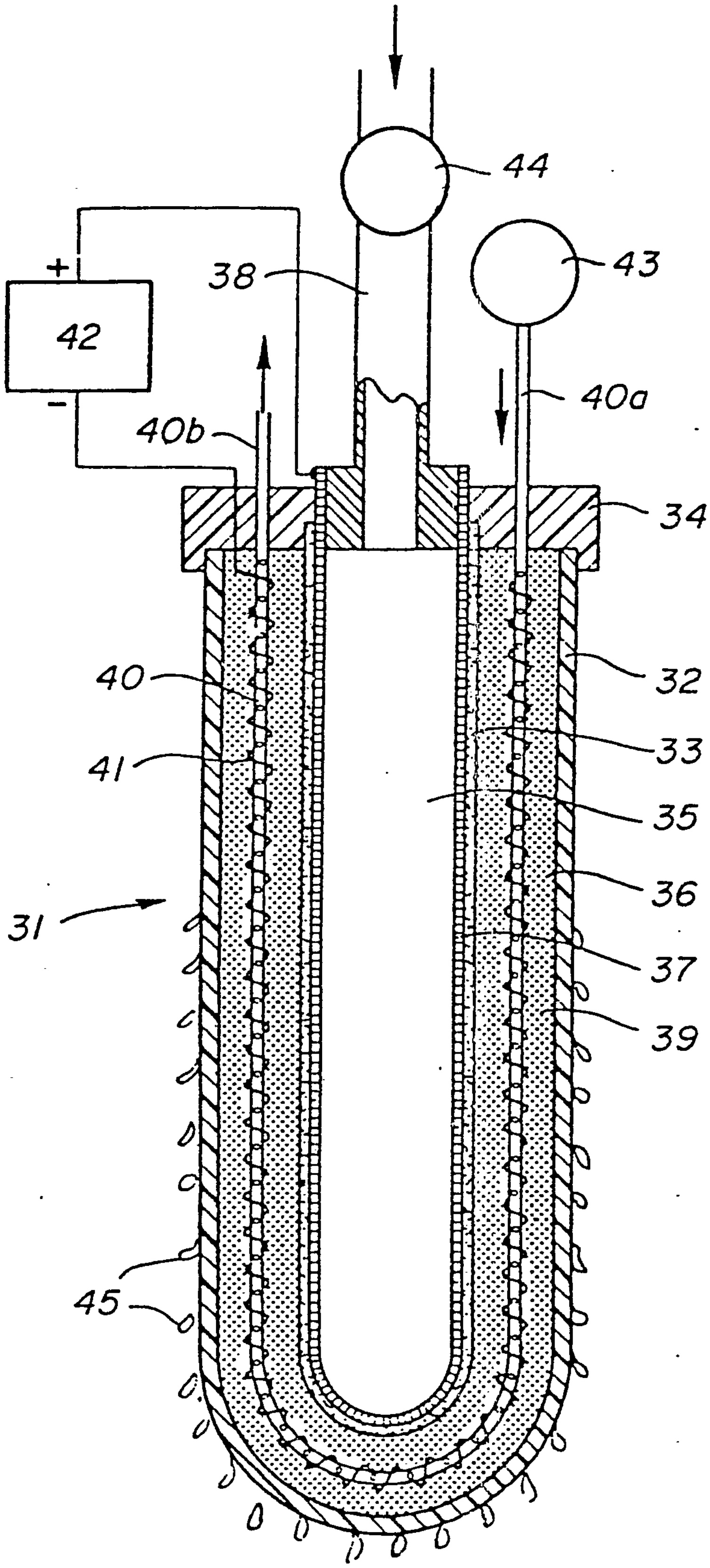


FIG. 2

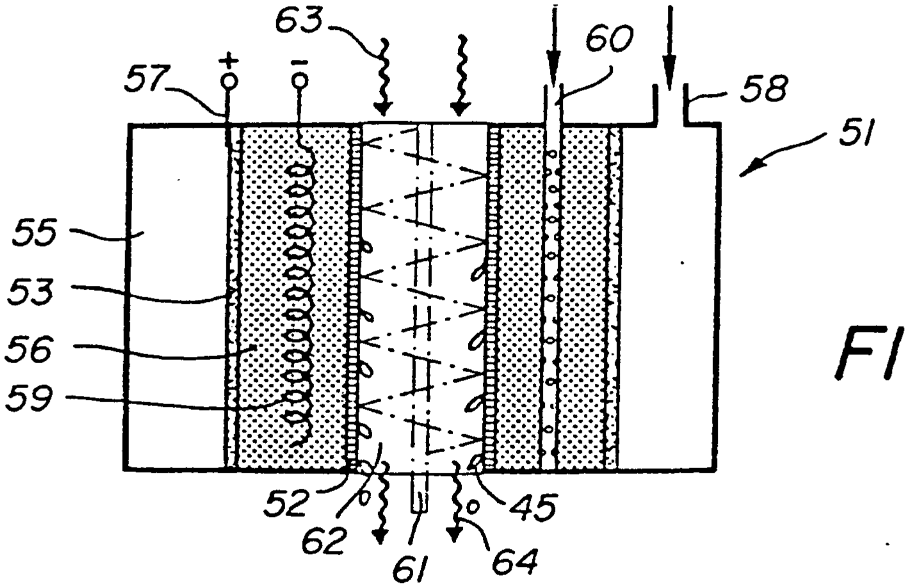


FIG. 3

FIG. 4

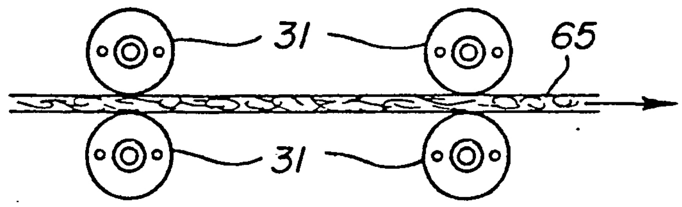


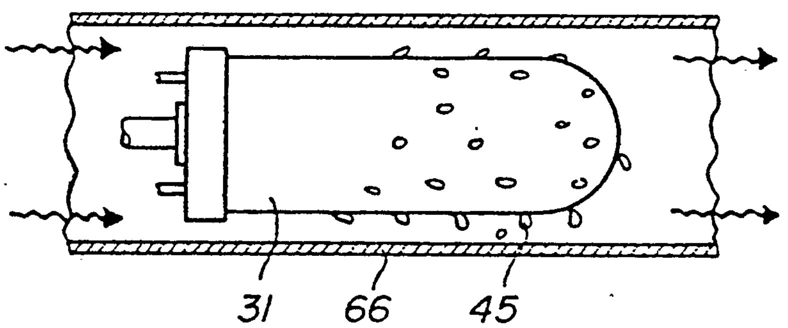


FIG. 5

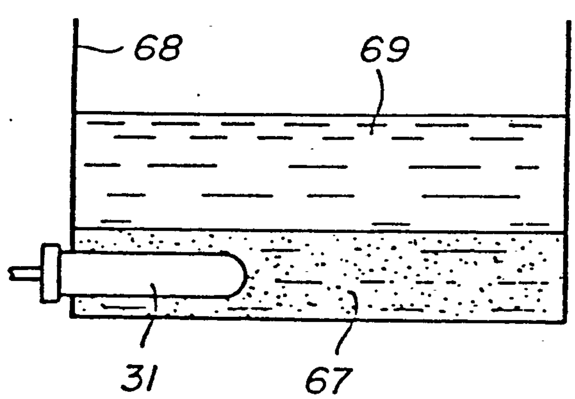


FIG. 6